# EUROPEAN PATENT APPLICATION

(11) **EP 4 628 932 A1**
(43) Date of publication of application: **08.10.2025**
(21) Application number: 22966802.5
(22) Date of filing: 30.11.2022
(51) Int. Cl.: G01S 13/89, G01S 17/89, G01S 7/40

(54) **DATA PROCESSING METHOD AND APPARATUS**

(71) Applicant: Shenzhen Yinwang Intelligent Technologies Co., Ltd., Shenzhen, Guangdong 518129 (CN)
(72) Inventor: WEI, Jinyi, Shenzhen, Guangdong 518129 (CN); HUANG, Qingqiu, Shenzhen, Guangdong 518129 (CN); YANG, Yue, Shenzhen, Guangdong 518129 (CN)
(74) Representative: Körber, Martin Hans
(86) International application number: PCT/CN2022/135295
(87) International publication number: WO 2024/113207

(57) **Abstract**

Provided are a data processing method and apparatus. The method includes: After a plurality of ground truth boxes that correspond to a lidar point cloud and a millimeter-wave radar point cloud are obtained, for unification of coordinate systems of the plurality of ground truth boxes and the millimeter-wave radar point cloud, position transformation further needs to be performed on the plurality of ground truth boxes until in all the ground truth boxes, a proportion of a quantity of ground truth boxes whose quantity of millimeter-wave radar point clouds reaches a preset threshold in a total quantity of ground truth boxes reaches a preset proportion, and then the plurality of ground truth boxes on which position transformation is performed and the millimeter-wave radar point cloud are trained, to generate a target detection model. This can avoid an inaccurate training result caused because a reflection point exists at a scattering energy center and does not correspond to a position of a ground truth box due to a working principle of a millimeter-wave radar based on an electromagnetic wave, and can optimize a training dataset of the target detection model, to improve accuracy of the target detection model.

## Description

### TECHNICAL FIELD

This application relates to the field of road traffic data collection technologies, and in particular, to a data processing method and apparatus.

### BACKGROUND

With rapid development of point cloud detection technologies of neural networks, target detection effect of lidar point clouds is greatly improved. However, due to rich features and excellent velocity detection performance of a millimeter-wave radar point cloud, the point cloud detection technology is gradually transferred from the laser detection field to the millimeter-wave radar detection field. The neural network-based point cloud detection technology relies heavily on ground truth. Therefore, accuracy of ground truth data greatly affects detection effect of neural network model training. The lidar point cloud can accurately reflect outlines of an object and an external environment, and is friendly to manual annotation. Therefore, ground truth of mainstream datasets is currently all from annotation results of the lidar point cloud.

Currently, the millimeter-wave radar point cloud is annotated by using laser ground truth, and then trained, to obtain a target detection model. However, due to a working principle of a millimeter-wave radar based on an electromagnetic wave, a reflection point exists at a scattering energy center, and it is relatively difficult to observe an accurate shape and an accurate location of an object by using naked eyes. A position of the millimeter-wave point cloud is different from a position of the lidar point cloud. This results in a low matching degree between the laser ground truth and the millimeter-wave radar point cloud, and low detection accuracy of the target detection model.

### SUMMARY

This application provides a data processing method and apparatus, to optimize a training dataset of a target detection model, to improve accuracy of the target detection model.

A first aspect of this application provides a data processing method. The method includes: obtaining a lidar point cloud and a millimeter-wave radar point cloud; obtaining a plurality of ground truth boxes corresponding to the lidar point cloud; and performing position transformation on the plurality of ground truth boxes until a preset condition is met, where the preset condition is that a proportion of a quantity of ground truth boxes whose quantity of millimeter-wave radar point clouds reaches a preset threshold in the plurality of ground truth boxes reaches a preset proportion, the millimeter-wave radar point cloud and the plurality of ground truth boxes are located in a same coordinate system, and the plurality of ground truth boxes on which position transformation is performed and the millimeter-wave radar point cloud are a training dataset of a millimeter-wave detection model.

In the foregoing aspect, after the plurality of ground truth boxes that correspond to the lidar point cloud, and the millimeter-wave radar point cloud are obtained, for unification of coordinate systems of the plurality of ground truth boxes and the millimeter-wave radar point cloud, the position transformation needs to be performed on the plurality of ground truth boxes until in all the ground truth boxes, the proportion of the quantity of ground truth boxes whose quantity of millimeter-wave radar point clouds reaches the preset threshold to the total quantity of ground truth boxes reaches the preset proportion, and then the plurality of ground truth boxes on which position transformation is performed and the millimeter-wave radar point cloud are trained, to generate a target detection model. This can avoid an inaccurate training result caused because a reflection point exists at a scattering energy center and does not correspond to a position of a ground truth box due to a working principle of a millimeter-wave radar based on an electromagnetic wave, and can optimize the training dataset of the target detection model, to improve accuracy of the target detection model.

In a possible implementation, the position transformation includes at least one of a translation operation, a rotation operation, and a scale-up operation, and a scaling factor of the scale-up operation is within a preset range.

In a possible implementation, after the performing position transformation on the plurality of ground truth boxes until a preset condition is met, the method further includes: clearing a ground truth box whose quantity of point clouds is less than the preset threshold in the plurality of ground truth boxes.

In the foregoing possible implementation, after the position transformation is performed on the ground truth box, a quantity of point clouds in some ground truth boxes is still less than the preset threshold. In order to improve a matching degree between the ground truth box and the millimeter-wave radar point cloud, the ground truth box whose quantity of point clouds is less than the preset threshold may be cleared.

In a possible implementation, the millimeter-wave radar point cloud includes a target-level point cloud and/or an original point cloud. Before the performing position transformation on the plurality of ground truth boxes until a preset condition is met, the method further includes: performing motion compensation on the target-level point cloud when the millimeter-wave radar point cloud includes the target-level point cloud.

In the foregoing possible implementation, because an operating frequency of a sensor of a lidar is different from that of the millimeter-wave radar, time synchronization needs to be performed on the millimeter-wave radar point cloud and the lidar point cloud through motion compensation. The target-level point cloud may be used to detect an absolute velocity of a target in an ego vehicle coordinate system, and motion compensation may be directly performed on the point cloud based on the absolute velocity, thereby improving the matching degree between the millimeter-wave radar point cloud and the ground truth box.

In a possible implementation, before the performing position transformation on the plurality of ground truth boxes until a preset condition is met, the method further includes: performing system delay compensation on the millimeter-wave radar point cloud.

In the foregoing possible implementation, because there is a specific time delay from transmission of an electromagnetic wave by the millimeter-wave radar, to reflection of the electromagnetic wave by the target, and then to reception and transmission of a signal by the sensor, the system delay compensation may be further performed on the millimeter-wave radar point cloud, to improve the matching degree between the millimeter-wave radar point cloud and the ground truth box.

In a possible implementation, after the performing position transformation on the plurality of ground truth boxes until a preset condition is met, the method further includes: extracting a target feature from the millimeter-wave radar point cloud, where the target feature includes a plurality of the following: coordinates, static/dynamic attributes, a radar cross section, an absolute velocity, a relative velocity, a radar type, and time sequence information of a superimposed frame; and performing training by using the plurality of ground truth boxes on which position transformation is performed and the target feature as the training dataset.

In the foregoing possible implementation, the target feature is extracted from the millimeter-wave radar point cloud, and then the target feature is trained, so that network precision can be improved when computing power is limited.

In a possible implementation, the millimeter-wave radar point cloud is generated by superimposing a plurality of frames of point clouds.

In the foregoing possible implementation, superimposition of the plurality of frames of point clouds can compensate for sparseness in the point cloud of the millimeter-wave radar.

A second aspect of this application provides a data processing apparatus. The apparatus can implement the method in any one of the first aspect and the possible implementations of the first aspect. The apparatus includes a corresponding unit or module configured to perform the method. The unit or module included in the apparatus can be implemented by software and/or hardware. For example, the apparatus may be a network device, or may be a chip, a chip system, a processor, or the like that supports a network device in implementing the method, or may be a logic module or software that can implement all or some functions of a network device.

A third aspect of this application provides a computer device, including a processor. The processor is coupled to a memory, the memory is configured to store instructions, and when the instructions are executed by the processor, the computer device is enabled to implement the method in any one of the first aspect or the possible implementations of the first aspect. For example, the computer device may be a network device, or may be a chip, a chip system, or the like that supports a network device in implementing the foregoing method.

A fourth aspect of this application provides a computer-readable storage medium. The computer-readable storage medium stores instructions. When the instructions are executed by a processor, the method in any one of the first aspect or the possible implementations of the first aspect is implemented.

A fifth aspect of this application provides a computer program product. The computer program product includes computer program code. When the computer program code is executed on a computer, the method in any one of the first aspect or the possible implementations of the first aspect is implemented.

### BRIEF DESCRIPTION OF DRAWINGS

FIG. 1 is a diagram of a structure of a vehicle according to an embodiment of this application;
FIG. 2 is a schematic flowchart of a data processing method according to an embodiment of this application;
FIG. 3 is a diagram of system delay compensation according to an embodiment of this application;
FIG. 4 is a diagram of a ground truth box whose position needs to be transformed according to an embodiment of this application;
FIG. 5 is a diagram of a translation operation according to an embodiment of this application;
FIG. 6 is a diagram of a rotation operation according to an embodiment of this application;
FIG. 7 is a diagram of a scale-up operation according to an embodiment of this application;
FIG. 8 is a diagram of a combination of a translation operation and a rotation operation according to an embodiment of this application;
FIG. 9 is a diagram of clearing a ground truth box according to an embodiment of this application;
FIG. 10 is a diagram of a structure of a data processing apparatus according to an embodiment of this application; and
FIG. 11 is a diagram of a structure of a computer device according to an embodiment of this application.

### DESCRIPTION OF EMBODIMENTS

Embodiments of this application provide a data processing method and apparatus, to optimize a training dataset of a target detection model, to improve accuracy of the target detection model.

The following describes embodiments of this application with reference to the accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to the process, method, product, or device.

The following describes embodiments of this application with reference to the accompanying drawings. A person of ordinary skill in the art may learn that, with development of technologies and emergence of a new scenario, the technical solutions provided in embodiments of this application are also applicable to similar technical problems.

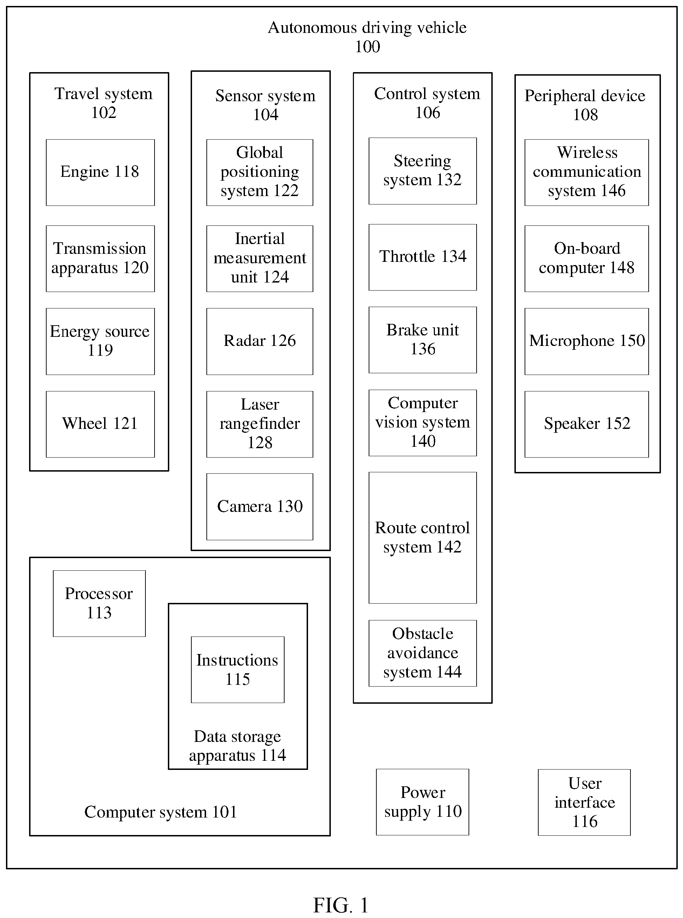

For ease of understanding of this solution, in an embodiment of this application, a structure of a vehicle is first described with reference to FIG. 1. The method provided in embodiments of this application may be applied to the vehicle shown in FIG. 1. FIG. 1 is a diagram of a structure of a vehicle according to an embodiment of this application.

In an embodiment, an autonomous driving vehicle 100 may be configured to be in a fully or partially autonomous driving mode. For example, in an autonomous driving mode, the autonomous driving vehicle 100 may control the autonomous driving vehicle 100 itself, determine a current status of the vehicle and a surrounding environment of the vehicle through a manual operation, determine possible behavior of at least one another vehicle in the surrounding environment, determine a confidence level corresponding to a possibility that the another vehicle performs the possible behavior, and control the autonomous driving vehicle 100 based on determined information. When the autonomous driving vehicle 100 is in the autonomous driving mode, the autonomous driving vehicle 100 may be set to perform an operation without interacting with a person.

The autonomous driving vehicle 100 may include various subsystems, for example, a travel system 102, a sensor system 104, a control system 106, one or more peripheral devices 108, a power supply 110, a computer system 101, and a user interface 116. Optionally, the autonomous driving vehicle 100 may include more or fewer subsystems, and each subsystem may include a plurality of elements. In addition, each subsystem and element of the autonomous driving vehicle 100 may be interconnected in a wired or wireless manner.

The travel system 102 may include a component that provides power for the autonomous driving vehicle 100. In an embodiment, the propulsion system 102 may include an engine 118, an energy source 119, a transmission apparatus 120, and a wheel 121. The engine 118 may be an internal combustion engine, an electric motor, an air compression engine, or another type of engine combination, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, another petroleum-based fuel, propane, another compressed gas-based fuel, ethanol, a solar panel, a battery, and another source of electrical power. The energy source 119 may further provide energy to another system of the autonomous driving vehicle 100.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another device, for example, a clutch. The drive shaft may include one or more shafts that may be coupled to one or more of the wheels 121.

The sensor system 104 may include several sensors that can sense information about an ambient environment of the autonomous driving vehicle 100. For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an oil temperature gauge) in an internal system of the monitored autonomous driving vehicle 100. Sensor data from one or more of these sensors can be used to detect an object and corresponding features (a location, a shape, a direction, a speed, and the like) of the object. Such detection and recognition are key functions for implementing a secure operation of the autonomous driving vehicle 100.

The positioning system 122 may be configured to estimate a geographical location of the autonomous driving vehicle 100. The IMU 124 is configured to sense a location and an orientation change of the autonomous driving vehicle 100 based on inertial acceleration. In an embodiment, the IMU 124 may be a combination of an accelerometer and a gyroscope.

The radar 126 may sense an object in the surrounding environment of the autonomous driving vehicle 100 by using a radio signal. In some embodiments, in addition to sensing the object, the radar 126 may be further configured to sense a velocity and/or a moving direction of the object.

The laser rangefinder 128 may sense, by using a laser, an object in an environment in which the autonomous driving vehicle 100 is located. In some embodiments, the laser rangefinder 128 may include one or more laser sources, a laser scanner, one or more detectors, and another system component.

The camera 130 may be configured to capture a plurality of images of the surrounding environment of the autonomous driving vehicle 100. The camera 130 may be a static camera or a video camera.

The control system 106 controls operations of the autonomous driving vehicle 100 and components of the autonomous driving vehicle 100. The control system 106 may include various elements, including a steering system 132, a throttle 134, a brake unit 136, a computer vision system 140, a route control system 142, and an obstacle avoidance system 144.

The steering system 132 may be operated to adjust a moving direction of the autonomous driving vehicle 100. For example, in an embodiment, the steering system 132 may be a steering wheel system.

The throttle 134 is configured to control an operating speed of the engine 118 and further control a speed of the autonomous driving vehicle 100.

The brake unit 136 is configured to control the autonomous driving vehicle 100 to decelerate. The brake unit 136 may use friction to slow down the wheel 121. In another embodiment, the brake unit 136 may convert kinetic energy of the wheel 121 into a current. The brake unit 136 may alternatively reduce a rotational speed of the wheel 121 in another form, to control the speed of the autonomous driving vehicle 100.

The computer vision system 140 may operate to process and analyze an image captured by the camera 130, to recognize objects and/or features in the surrounding environment of the autonomous driving vehicle 100. The objects and/or the features may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to: draw a map for an environment, track an object, estimate a speed of the object, and the like.

The route control system 142 is configured to determine a traveling route of the autonomous driving vehicle 100. In some embodiments, the route control system 142 may determine a traveling route for the autonomous driving vehicle 100 with reference to data from the global positioning system 122, and one or more predetermined maps.

The obstacle avoidance system 144 is configured to recognize, evaluate, and avoid or otherwise cross over a potential obstacle in the environment around the autonomous driving vehicle 100.

Certainly, in an instance, the control system 106 may additionally or alternatively include a component other than those shown and described. Alternatively, some of the foregoing components may be removed.

The autonomous driving vehicle 100 interacts with an external sensor, another vehicle, another computer system, or a user by using the peripheral device 108. The peripheral device 108 may include a wireless communication system 146, an on-board computer 148, a microphone 150, and/or a speaker 152.

In some embodiments, the peripheral device 108 provides a means for a user of the autonomous driving vehicle 100 to interact with the user interface 116. For example, the on-board computer 148 may provide information for the user of the autonomous driving vehicle 100. The user interface 116 may further operate the on-board computer 148 to receive an input of the user. The on-board computer 148 may perform an operation through a touchscreen. In another case, the peripheral device 108 may provide a means for the autonomous driving vehicle 100 to communicate with another device in the vehicle. For example, the microphone 150 may receive audio (for example, a voice command or another audio input) from the user of the autonomous driving vehicle 100. Similarly, the speaker 152 may output audio to the user of the autonomous driving vehicle 100.

The wireless communication system 146 may wirelessly communicate with one or more devices directly or through a communication network. For example, the wireless communication system 146 may use 3G cellular communication such as CDMA, EVDO, or GSM/GPRS, or use 4G cellular communication such as LTE, or use 5G cellular communication. The wireless communication system 146 may communicate with a wireless local area network (wireless local area network, WLAN) through Wi-Fi. In some embodiments, the wireless communication system 146 may directly communicate with a device through an infrared link, Bluetooth, or ZigBee. Other wireless protocols, such as various vehicle communication systems, for example, the wireless communication system 146, may include one or more dedicated short range communications (dedicated short range communications, DSRC) devices, and these devices may include public and/or private data communication between vehicles and/or roadside stations.

The power supply 110 may supply power to various components of the autonomous driving vehicle 100. In an embodiment, the power supply 110 may be a rechargeable lithium-ion or lead-acid battery. One or more battery groups of such a battery may be configured as a power supply to supply power to the various components of the autonomous driving vehicle 100. In some embodiments, the power supply 110 and the energy source 119 may be implemented together, for example, in some all-electric vehicles.

Some or all functions of the autonomous driving vehicle 100 are controlled by the computer system 101. The computer system 101 may include at least one processor 113. The processor 113 executes instructions 115 stored in a non-transitory computer-readable medium such as a data storage apparatus 114. The computer system 101 may alternatively be a plurality of computing devices that control an individual component or a subsystem of the autonomous driving vehicle 100 in a distributed manner.

The processor 113 may be any conventional processor, for example, a commercially available CPU. Alternatively, the processor may be a dedicated device such as an ASIC or another hardware-based processor. Although FIG. 1 functionally illustrates the processor, the memory, and other elements of the computer system 101 in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from a housing of the computer system 101. Thus, it is understood that a reference to the processor or the computer includes a reference to a set of processors, computers, or memories that may or may not operate in parallel. Different from using a single processor to perform the steps described herein, some components such as a steering component and a deceleration component each may include a respective processor. The processor performs only computation related to a component-specific function.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the data storage apparatus 114 may include the instructions 115 (for example, program logic), and the instructions 115 may be executed by the processor 113 to perform various functions of the autonomous driving vehicle 100, including those functions described above. The data storage apparatus 114 may further include additional instructions, including instructions for sending data to, receiving data from, interacting with, and/or controlling one or more of the propulsion system 102, the sensor system 104, the control system 106, and the peripheral device 108.

In addition to the instructions 115, the data storage apparatus 114 may further store data, such as a road map, route information, a location, a direction, a speed, and other vehicle data of the vehicle, and other information. Such information may be used by the autonomous driving vehicle 100 and the computer system 101 during operation of the autonomous driving vehicle 100 in an autonomous mode, a semi-autonomous mode, and/or a manual mode.

The user interface 116 is configured to provide information for or receive information from the user of the autonomous driving vehicle 100. Optionally, the user interface 116 may include one or more input/output devices in a set of the peripheral devices 108, for example, the wireless communication system 146, the on-board computer 148, the microphone 150, and the speaker 152.

The computer system 101 may control functions of the autonomous driving vehicle 100 based on inputs received from various subsystems (for example, the travel system 102, the sensor system 104, and the control system 106) and from the user interface 116. For example, the computer system 101 may control a steering unit 132 by using an input from the control system 106, to avoid an obstacle that is detected by the sensor system 104 and the obstacle avoidance system 144. In some embodiments, the computer system 101 may operable to provide control over many aspects of the autonomous driving vehicle 100 and the subsystems of the autonomous driving vehicle 100.

Optionally, one or more of the foregoing components may be installed separately from or associated with the autonomous driving vehicle 100. For example, the data storage apparatus 114 may be partially or completely separated from the autonomous driving vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be understood as a limitation to this embodiment of this application.

An autonomous driving vehicle traveling on a road, such as the foregoing autonomous driving vehicle 100, may recognize an object in a surrounding environment of the autonomous driving vehicle 100, to determine adjustment on a current speed. The object may be another vehicle, a traffic control device, or an object of another type. In some examples, each recognized object may be considered independently and may be used to determine a speed to be adjusted by the autonomous driving vehicle, based on features of each object, such as a current speed of the object, acceleration of the object, or a distance between the object and the vehicle.

Optionally, the autonomous driving vehicle 100 or a computing device (such as the computer system 101, the computer vision system 140, or the data storage apparatus 114 in FIG. 1) associated with the autonomous driving vehicle 100 may predict a behavior of the recognized object based on a characteristic of the recognized object and a state (for example, traffic, rain, ice on a road, or the like) of the surrounding environment. Optionally, recognized objects depend on behaviors of each other. Therefore, all recognized objects may be considered together to predict a behavior of a single recognized object. The autonomous driving vehicle 100 can adjust the speed of the autonomous driving vehicle 100 based on a predicted behavior of the recognized object. In other words, the autonomous driving vehicle can determine, based on the predicted behavior of the object, a specific stable state (for example, acceleration, deceleration, or stop) to which the vehicle needs to be adjusted. In this process, another factor may also be considered to determine the speed of the autonomous driving vehicle 100, for example, a transverse location of the autonomous driving vehicle 100 on a road on which the autonomous driving vehicle 100 travels, curvature of the road, and proximity between a static object and a dynamic object.

In addition to providing an instruction for adjusting the speed of the autonomous driving vehicle, the computing device may further provide an instruction for modifying a steering angle of the autonomous driving vehicle 100, so that the autonomous driving vehicle can follow a given track and/or maintain safe transverse and vertical distances from an object (for example, a vehicle in a neighboring lane on the road) near the autonomous driving vehicle.

The autonomous driving vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

Currently, in the field of intelligent driving perception, with rapid development of point cloud detection technologies of neural networks, target detection effect of lidar point clouds is greatly improved. However, due to rich features and excellent velocity detection performance of a millimeter-wave radar point cloud, the point cloud detection technology is gradually transferred from the laser detection field to the millimeter-wave radar detection field. The neural network-based point cloud detection technology relies heavily on ground truth. Therefore, accuracy of ground truth data greatly affects detection effect of neural network model training. The lidar point cloud can accurately reflect outlines of an object and an external environment, and is friendly to manual annotation. Therefore, ground truth of mainstream datasets is currently all from annotation results of the lidar point cloud.

Currently, the millimeter-wave radar point cloud is annotated by using laser ground truth, and then trained, to obtain a target detection model. However, due to a working principle of a millimeter-wave radar based on an electromagnetic wave, a reflection point exists at a scattering energy center, and it is relatively difficult to observe an accurate shape and an accurate location of an object by using naked eyes. A position of the millimeter-wave point cloud is different from a position of the lidar point cloud. This results in a low matching degree between the laser ground truth and the millimeter-wave radar point cloud, and low detection accuracy of the target detection model.

To resolve the foregoing problems, an embodiment of this application provides a data processing method. The method is described as follows.

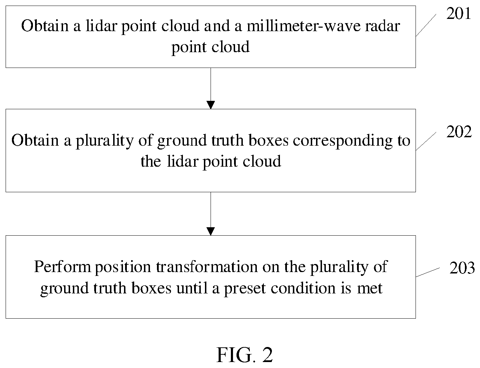

FIG. 2 is a schematic flowchart of a data processing method according to an embodiment of this application. The method includes the following steps.

Step 201: Obtain a lidar point cloud and a millimeter-wave radar point cloud.

In this embodiment, this embodiment of this application may be applied to an on-board computing platform of an autonomous driving vehicle. A lidar and a millimeter-wave radar on the autonomous driving vehicle may collect object data. Correspondingly, the lidar collects the object data to generate a lidar point cloud, and the millimeter-wave radar collects the object data to generate a millimeter-wave radar point cloud.

In a working process of the lidar, the lidar emits a laser, and the laser is irradiated on a surface of an object and is reflected. Based on a received reflected laser, the lidar may obtain information about the object irradiated by the laser. Specifically, the lidar may obtain, by calculation, coordinate information of all points on the surface of the object irradiated by the laser in three-dimensional space, and a combination of these points is the lidar point cloud.

A working principle of the millimeter-wave radar is as follows: A high-frequency circuit is used to generate an electromagnetic wave with a specific modulation frequency, an antenna is used to send the electromagnetic wave and receive an electromagnetic wave from a target, and all parameters of the target are calculated based on parameters of the sent and received electromagnetic waves. The millimeter-wave radar can perform distance measurement, velocity measurement, and azimuth measurement on a plurality of targets simultaneously. The velocity measurement is based on Doppler effect, and the azimuth measurement (including a horizontal angle and a vertical angle) is implemented by using an antenna array. It may be understood that a millimeter-wave detection point includes all the parameters of the target, and a combination of these points is the millimeter-wave radar point cloud.

Because the millimeter-wave radar point cloud has a disadvantage of sparseness, a plurality of frames of point clouds may be superimposed for a collected millimeter-wave radar point cloud, so that the millimeter-wave radar point cloud can more obviously reflect a location of an object.

Currently, there are two types of millimeter-wave radar point clouds: original point cloud and target-level point cloud. The target-level point cloud is a result obtained by clustering and tracking the original point cloud. This embodiment of this application is applicable to both types of millimeter-wave point clouds, and a point cloud source for constructing a dataset may be one of the two types, or may include both the types.

Because operating frequencies of sensors of the lidar and the millimeter-wave radar are different, detection of the two types of sensors cannot be synchronously triggered. Time synchronization between a frame-sampled annotated ground truth box of a laser point cloud and a detection result of the millimeter-wave point cloud cannot be guaranteed, and a latest frame with a smallest time difference is used as a substitute. Therefore, real coordinates of the millimeter-wave radar point cloud at a laser annotation time need to be calculated, that is, motion compensation needs to be performed on the millimeter-wave radar point cloud. The target-level point cloud is a result obtained by clustering and tracking the original point cloud, and can detect an absolute velocity vx/vy of a target in an ego vehicle coordinate system. Therefore, the motion compensation may be directly performed on the point cloud based on the absolute velocity vx/vy. However, an original millimeter-wave radar point cloud can detect only a relative radial velocity and an observation angle of a reflection point, and cannot obtain a tangential velocity of the reflection point, so that an accurate motion compensation result cannot be obtained. Therefore, the motion compensation may be performed only on the target-level point cloud.

A specific motion compensation manner may be as follows: motion compensation correction is performed on each frame of point cloud based on odometry information between a start time and an end time of each frame of point cloud at the absolute velocity vx/vy of the target in the ego vehicle coordinate system, to obtain a more accurate point cloud. Table 1 shows effect of the target-level point cloud at different road condition levels (val, ica, and nca) before and after motion compensation based on the absolute velocity vx or vy. Table 2 shows effect of the original point cloud at different road condition levels (val, ica, and nca) before and after motion compensation based on a component vx/vy of a relative radial velocity. The absolute velocity vx/vy of the target-level point cloud may represent a real motion status of the target. However, the relative radial velocity of the original point cloud has no physical meaning in the ego vehicle coordinate system, and forced motion compensation deteriorates the effect.

**Table 1**

| Target-level point cloud | val | ica | nca |
|---|---|---|---|
| Compensation for an absolute vehicle velocity | 0.7446 | 0.5610 | 0.3993 |
| No compensation | 0.6842 | 0.5369 | 0.3788 |

**Table 2**

| Original point cloud | val | ica | nca |
|---|---|---|---|
| Compensation for an ego vehicle | 0.7345 | 0.5900 | 0.3701 |
| No compensation | 0.7583 | 0.6197 | 0.4062 |

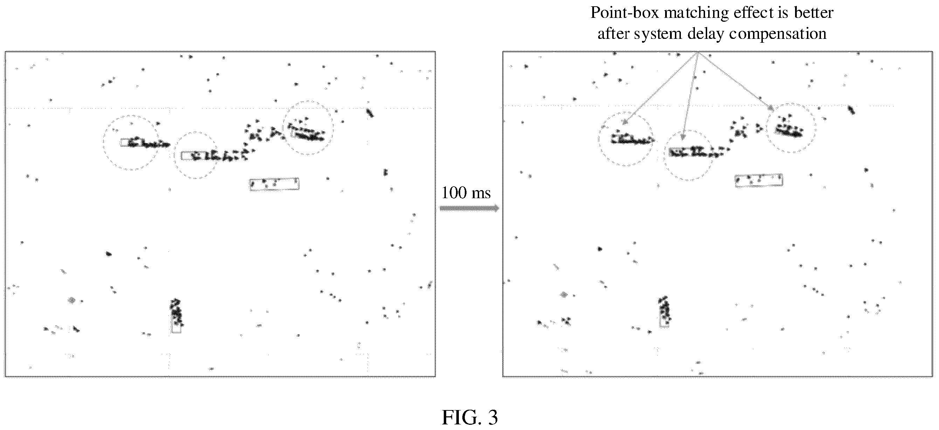

There is a specific time delay from transmission of an electromagnetic wave by the millimeter-wave radar, to reflection of the electromagnetic wave by a target, and then to reception and transmission of a signal by a sensor. In other words, in this embodiment of this application, before position transformation is performed on a ground truth box, system delay compensation may be further performed on the millimeter-wave radar point cloud. Refer to FIG. 3. In this application, a preset delay (100 ms is used as an example in the figure) may be used as a delay difference of the millimeter-wave radar point cloud for adjustment. A manner of obtaining the preset delay may be: performing point cloud position compensation by using different preset delays, traversing an interval between a possible maximum delay and a minimum delay of a system by using a step size of 10 ms, and finding a delay with best point-box matching effect based on a visualization result. This is not limited herein.

Step 202: Obtain a plurality of ground truth boxes corresponding to the lidar point cloud.

In this embodiment, the lidar point cloud can accurately reflect outlines of an object and an external environment, and is friendly to manual annotation. Therefore, a ground truth box of the lidar point cloud obtained through manual annotation may be obtained. A quantity of the ground truth box may be one or more, which is not limited herein.

Step 203: Perform position transformation on the plurality of ground truth boxes until a preset condition is met. The preset condition is that a proportion of a quantity of ground truth boxes whose quantity of millimeter-wave radar point clouds reaches a preset threshold in the plurality of ground truth boxes reaches a preset proportion, the millimeter-wave radar point cloud and the plurality of ground truth boxes are located in a same coordinate system, and the plurality of ground truth boxes on which position transformation is performed and the millimeter-wave radar point cloud are a training dataset of a millimeter-wave detection model.

In this embodiment, a sensing range and a capability of the millimeter-wave radar are different from those of the lidar, and positions of the plurality of ground truth boxes are not necessarily the same as positions of millimeter-wave radar point clouds. Therefore, the position of the ground truth box further needs to be adjusted, so that in all the ground truth boxes, the proportion of the quantity of ground truth boxes whose quantity of millimeter-wave radar point clouds reaches the preset threshold to all the ground truth boxes reaches the preset proportion. The proportion may be any one of 50%, 60%, 70%, 80%, or 90%, that is, most of the ground truth boxes include more millimeter-wave radar point clouds than the preset threshold, so that the position of the ground truth box matches the position of the millimeter-wave radar point cloud. If the millimeter-wave radar point cloud is obtained by superimposing a plurality of frames of point clouds, the preset threshold may be at least a quantity of superimposed frames. For example, it is assumed that the millimeter-wave radar point cloud is obtained by superimposing four frames of point clouds, a quantity of point clouds included in the ground truth box that reaches the preset threshold is at least 4. A position relationship between the plurality of ground truth boxes on which position transformation is performed and the millimeter-wave radar point cloud, and feature data of the millimeter-wave radar point cloud may be used as the training dataset of the millimeter-wave detection model. A millimeter-wave detection model with high accuracy is trained by using a ground truth box and a millimeter-wave radar point cloud that are highly matched. Before the position of the ground truth box is adjusted, the millimeter-wave radar point cloud and the ground truth box need to be located in the same coordinate system. A manner in which the millimeter-wave radar point cloud and the ground truth box are located in the same coordinate system may be that data collected by the lidar and the millimeter-wave radar is located in the same coordinate system, or may be that coordinate systems are unified after collection. This is not limited herein.

Whether the preset condition is met may be determined by the on-board computing platform, or may be determined by manual observation. This is not limited herein.

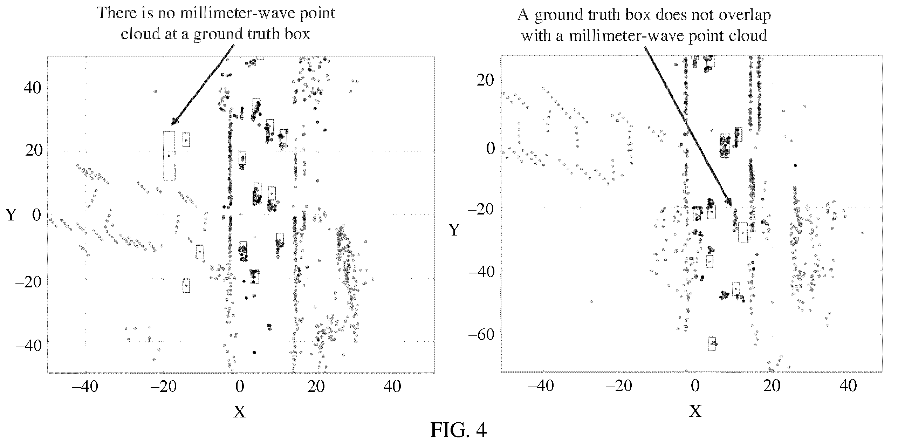

Because some ground truth boxes already include a millimeter-wave radar point cloud that exceeds the preset threshold before position transformation, in this embodiment of this application, a ground truth box whose position needs to be transformed needs to be further obtained. In this obtaining manner, the plurality of ground truth boxes may be first filtered once, refer to a diagram of ground truth boxes whose positions need to be transformed shown in FIG. 4, a ground truth box whose millimeter-wave radar point cloud is less than the preset threshold is determined as the ground truth box whose position needs to be transformed, then, positions of these ground truth boxes are transformed.

A manner of transforming the position of the ground truth box may include at least one of a translation operation, a rotation operation, and a scale-up operation. A translation magnitude of the translation operation and a scaling factor of the scale-up operation are within a preset range, that is, the position of the ground truth box can be transformed only within a specific range, and cannot be transformed without limitation.

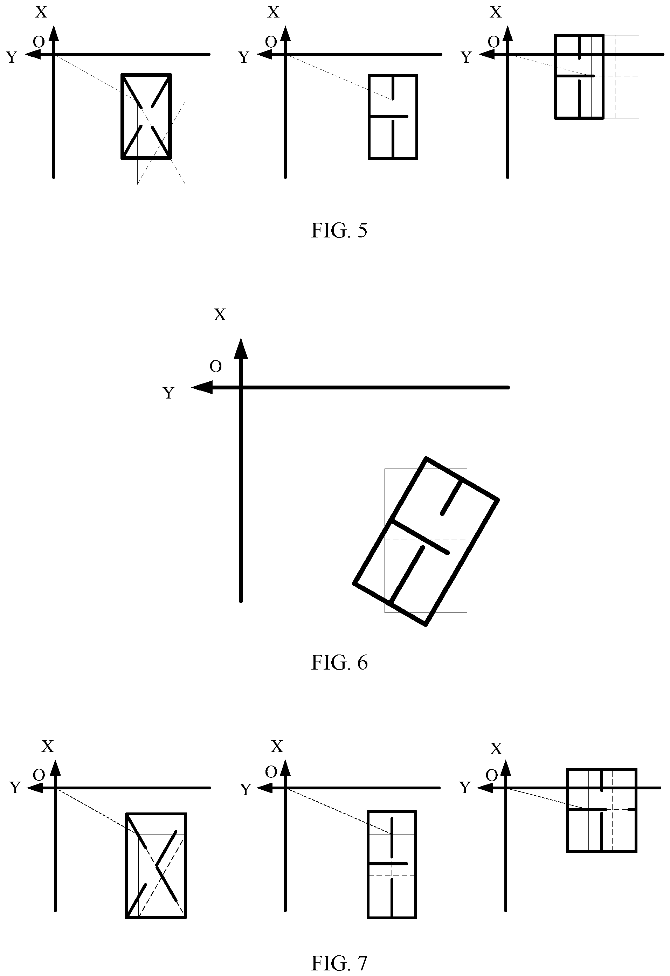

Specifically, the translation operation may include two types. Refer to FIG. 5. One is moving along a diagonal direction of a ground truth box, and the other is moving along a long side (short side) of a ground truth box. For the former, a moving direction is determined based on a minimum distance between a vertex of the ground truth box and a central point of an ego vehicle. As shown in a first figure on the left of FIG. 5, a position of a thin box is an initial position, and a position of a thick box is a translated position. For the latter, a moving direction is determined based on a minimum distance between middle points of four sides of the ground truth box and the center point of the ego vehicle. As shown in two figures on the right of FIG. 5, a position of a thin box is an initial position, and a position of a thick box is a translated position.

The rotation operation is to use a center point of a ground truth box as a reference, and increase or decrease heading (heading) by any angle, so that the ground truth box swings left or right, to cover a millimeter-wave radar point cloud scattered around the box by the target. For details, refer to FIG. 6. A position of a thin box is an original position, and a position of a thick box is a rotated position.

The scale-up operation is to calculate a distance from four corner vertices or midpoints of four sides of a ground truth box to a center point of an ego vehicle, and determine an extension direction of the ground truth box based on a minimum distance. As shown in FIG. 7, a black dashed line represents a line segment with a shortest distance. The scaling factor of the scale-up operation can only be within the preset range, a position of a thin box is an original position, and a position of a thick box is a scaled-up position.

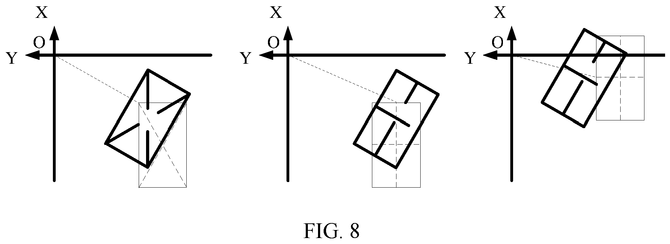

The position transformation may alternatively include a random combination of the translation operation, the rotation operation, and the scale-up operation. A combination of the translation operation and the rotation operation is used as an example. Refer to FIG. 8. The rotation operation may be performed on the basis of translation in FIG. 5.

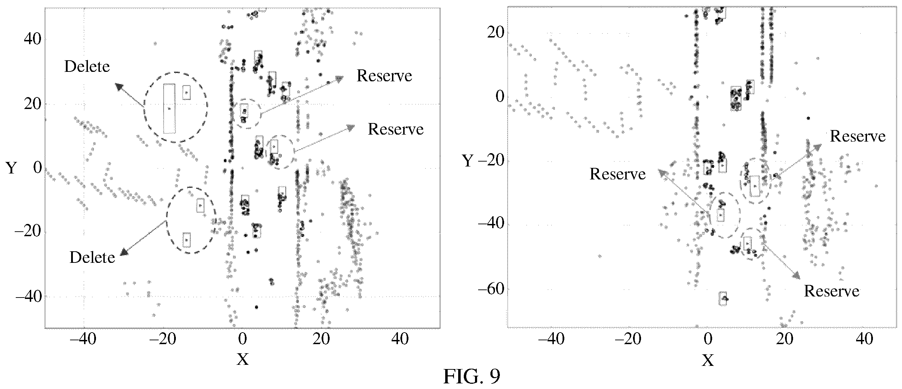

After the position transformation is performed on the ground truth box, a quantity of point clouds in some ground truth boxes is still less than the preset threshold. In order to improve a matching degree between the ground truth box and the millimeter-wave radar point cloud, the ground truth box whose quantity of point clouds is less than the preset threshold may be cleared. For example, the millimeter-wave radar is insensitive to a static target and a target on an opposite side of a metal guardrail, and point clouds are sparse, and a detection position is not necessarily on a surface of an object contour. As a result, there is no millimeter-wave point cloud in some laser ground truth boxes, that is, after position transformation is performed on the ground truth box, there is still no millimeter-wave radar point cloud in some ground truth boxes, or there is still a relatively small quantity of millimeter-wave radar point clouds in some ground truth boxes. In this embodiment of this application, a ground truth box whose quantity of point clouds is less than the preset threshold may be further deleted from the ground truth box on which position transformation is performed, to avoid poor training effect caused by different positions of the ground truth box and the millimeter-wave radar point cloud. As shown in FIG. 9, a ground truth box marked to be deleted is because position transformation of the ground truth box is limited, and a quantity of nearby point clouds does not meet the preset threshold. In this case, the ground truth box affects training for a millimeter-wave radar point cloud, and should be deleted. There are point clouds whose quantity meets the preset threshold near a ground truth box marked to be reserved, and the point cloud may be covered after position transformation, thereby improving a matching degree with a millimeter-wave radar point cloud.

In this embodiment of this application, when the millimeter-wave radar point cloud is trained, a target feature may be further extracted from the millimeter-wave radar point cloud first, to provide, by using a limited computing power, a feature selection that is most effective in improving neural network precision. The target feature may be a plurality of the following: coordinates, static/dynamic attributes, a radar cross section (radar cross section, RCS), an absolute velocity, a relative velocity, a radar type, and time sequence information of a superimposed frame.

Position information and velocity information of a millimeter-wave radar point cloud are most basic and key point features of a millimeter-wave point cloud. The position information includes point cloud coordinates and time sequence information of a superimposed frame. Because motion compensation is not performed on the original point cloud in a multi-frame superimposition process, the time sequence information of the superimposed frame is particularly important. In this embodiment of this application, there may be a velocity feature combination manner: a target velocity, an ego vehicle velocity, and static/dynamic attributes that are calculated from the target velocity and ego vehicle velocity. Performance of this feature combination is better than performance of a single feature or a combination of any two features. The static/dynamic attributes may be included in information carried in the millimeter-wave radar point cloud, or may be obtained by calculation. The calculation manner may be as follows.

Original point cloud: A point cloud that meets a condition *v_{ego}* * cos(*theta*2*Ego*) *- vᵣ > 1m*/*s* is determined to be dynamic, where *v_{ego}* represents an ego vehicle velocity, *theta*2*Ego* represents an observation angle of the point cloud, and *vᵣ* represents a relative radial velocity of the point cloud.

Target-level point cloud: A point cloud that meets a condition *vₓ* > 0*m*/*s* or *v_{y} >* 0*m*/*s* is determined to be dynamic, where *vₓ* or *v_{y}* represent an absolute velocity of the point cloud.

In this embodiment of this application, after the plurality of ground truth boxes that correspond to the lidar point cloud, and the millimeter-wave radar point cloud are obtained, for unification of coordinate systems of the plurality of ground truth boxes and the millimeter-wave radar point cloud, the position transformation needs to be performed on the plurality of ground truth boxes until in all the ground truth boxes, the proportion of the quantity of ground truth boxes whose quantity of millimeter-wave radar point clouds reaches the preset threshold to the total quantity of ground truth boxes reaches the preset proportion, and then the plurality of ground truth boxes on which position transformation is performed and the millimeter-wave radar point cloud are trained, to generate a target detection model. This can avoid an inaccurate training result caused because a reflection point exists at a scattering energy center and does not correspond to a position of the ground truth box due to a working principle of the millimeter-wave radar based on an electromagnetic wave, to improve accuracy of the target detection model.

The foregoing describes the data processing method, and the following describes an apparatus for performing the method.

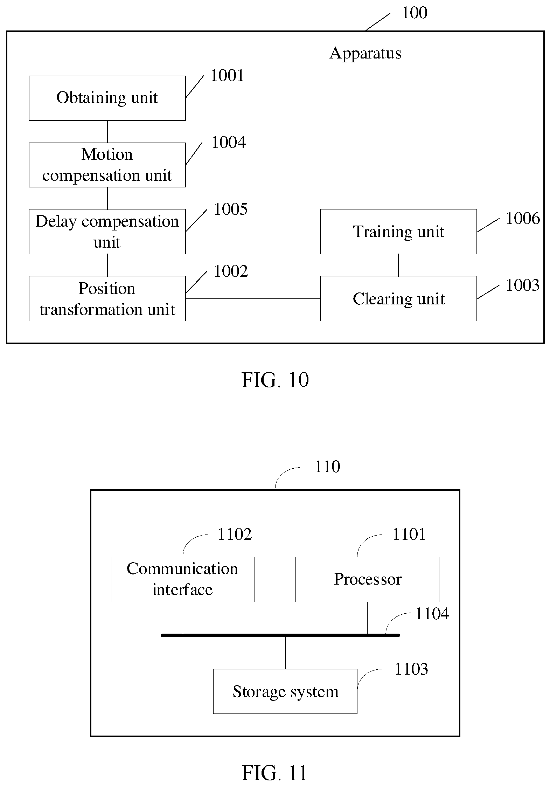

FIG. 10 is a diagram of a structure of a data processing apparatus according to an embodiment of this application. The apparatus 100 includes the following units.

An obtaining unit 1001 is configured to obtain a lidar point cloud and a millimeter-wave radar point cloud, and obtain a plurality of ground truth boxes corresponding to the lidar point cloud.

A position transformation unit 1002 is configured to perform position transformation on the plurality of ground truth boxes until a preset condition is met. The preset condition is that a proportion of a quantity of ground truth boxes whose quantity of millimeter-wave radar point clouds reaches a preset threshold in the plurality of ground truth boxes reaches a preset proportion, the millimeter-wave radar point cloud and the plurality of ground truth boxes are located in a same coordinate system, and the plurality of ground truth boxes on which position transformation is performed and the millimeter-wave radar point cloud are a training dataset of a millimeter-wave detection model.

The obtaining unit 1001 is configured to perform step 201 and step 202 in the method embodiment shown in FIG. 2. The position transformation unit 1002 is configured to perform step 203 in the method embodiment shown in FIG. 2.

Optionally, the position transformation includes at least one of a translation operation, a rotation operation, and a scale-up operation, and a scaling factor of the scale-up operation is within a preset range.

Optionally, the apparatus further includes a clearing unit 1003, and the clearing unit 1003 is specifically configured to:
clear a ground truth box whose quantity of point clouds is less than preset threshold in the plurality of ground truth boxes.

Optionally, the millimeter-wave radar point cloud includes a target-level point cloud and/or an original point cloud. The apparatus 100 further includes a motion compensation unit 1004, and the motion compensation unit 1004 is specifically configured to:
perform motion compensation on the target-level point cloud when the millimeter-wave radar point cloud includes the target-level point cloud.

Optionally, the apparatus 100 further includes a delay compensation unit 1005, and the delay compensation unit 1005 is specifically configured to:
perform system delay compensation on the millimeter-wave radar point cloud.

Optionally, the apparatus 100 further includes a training unit 1006, and the training unit 1006 is specifically configured to:
extract a target feature from the millimeter-wave radar point cloud, where the target feature includes a plurality of the following: coordinates, static/dynamic attributes, a radar cross section, an absolute velocity, a relative velocity, a radar type, and time sequence information of a superimposed frame; and
perform training by using the plurality of ground truth boxes on which position transformation is performed and the target feature as a training dataset.

Optionally, the millimeter-wave radar point cloud is generated by superimposing a plurality of frames of point clouds.

FIG. 11 is a diagram of a possible logical structure of a computer device 110 according to an embodiment of this application. The computer device 110 includes a processor 1101, a communication interface 1102, a storage system 1103, and a bus 1104. The processor 1101, the communication interface 1102, and the storage system 1103 are connected to each other through the bus 1104. In this embodiment of this application, the processor 1101 is configured to control and manage an action of the computer device 110. For example, the processor 1101 is configured to perform the steps performed by the on-board computing platform in the method embodiment in FIG. 2. The communication interface 1102 is configured to support the computer device 110 in performing communication. The storage system 1103 is configured to store program code and data of the computer device 110.

The processor 1101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1101 may alternatively be a combination, for example, a combination including one or more microprocessors or a combination of a digital signal processor and a microprocessor, for implementing a computing function. The bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The obtaining unit 1001, the position transformation unit 1002, the clearing unit 1003, the motion compensation unit 1004, the delay compensation unit 1005, and the training unit 1006 in the apparatus 100 are equivalent to the processor 1101 in the computer device 110.

The computer device 110 in this embodiment may correspond to the on-board computing platform in the method embodiment in FIG. 2. The communication interface 1102 in the computer device 110 may implement functions and/or various steps implemented by the on-board computing platform in the method embodiment in FIG. 2. For brevity, details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

For example, the unit in any one of the foregoing apparatuses may be one or more integrated circuits configured to implement the foregoing method, for example, one or more application-specific integrated circuits (application-specific integrated circuits, ASICs), one or more microprocessors (digital signal processors, DSPs), or one or more field programmable gate arrays (field programmable gate arrays, FPGAs), or a combination of at least two of these integrated circuit forms. For another example, when the unit in the apparatus may be implemented in a manner in which the processing element schedules a program, the processing element may be a general-purpose processor, such as a CPU or another processor that can invoke a program. For still another example, the units may be integrated and implemented in a form of a system-on-a-chip (system-on-a-chip, SOC).

In another embodiment of this application, a computer-readable storage medium is further provided. The computer-readable storage medium stores computer-executable instructions. When a processor of a device executes the computer-executable instructions, the device performs the method performed by a primary control node in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by a primary control node in the foregoing method embodiment.

It may be clearly understood by a person skilled in the art that, for convenient and brief description, for a detailed working process of the foregoing system, apparatus, and unit, reference may be made to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data processing method, comprising:
obtaining a lidar point cloud and a millimeter-wave radar point cloud;
obtaining a plurality of ground truth boxes corresponding to the lidar point cloud; and
performing position transformation on the plurality of ground truth boxes until a preset condition is met, wherein the preset condition is that a proportion of a quantity of ground truth boxes whose quantity of millimeter-wave radar point clouds reaches a preset threshold in the plurality of ground truth boxes reaches a preset proportion, the millimeter-wave radar point cloud and the plurality of ground truth boxes are located in a same coordinate system, and the plurality of ground truth boxes on which position transformation is performed and the millimeter-wave radar point cloud are a training dataset of a millimeter-wave detection model.

2. The method according to claim 1, wherein the position transformation comprises at least one of a translation operation, a rotation operation, and a scale-up operation, and a scaling factor of the scale-up operation is within a preset range.

3. The method according to claim 1 or 2, wherein after the performing position transformation on the plurality of ground truth boxes until a preset condition is met, the method further comprises:
clearing a ground truth box whose quantity of point clouds is less than the preset threshold in the plurality of ground truth boxes.

4. The method according to any one of claims 1 to 3, wherein the millimeter-wave radar point cloud comprises a target-level point cloud and/or an original point cloud, and before the performing position transformation on the plurality of ground truth boxes until a preset condition is met, the method further comprises:
performing motion compensation on the target-level point cloud when the millimeter-wave radar point cloud comprises the target-level point cloud.

5. The method according to any one of claims 1 to 4, wherein before the performing position transformation on the plurality of ground truth boxes until a preset condition is met, the method further comprises:
performing system delay compensation on the millimeter-wave radar point cloud.

6. The method according to any one of claims 1 to 5, wherein after the performing position transformation on the plurality of ground truth boxes until a preset condition is met, the method further comprises:
extracting a target feature from the millimeter-wave radar point cloud, wherein the target feature comprises a plurality of the following: coordinates, static/dynamic attributes, a radar cross section, an absolute velocity, a relative velocity, a radar type, and time sequence information of a superimposed frame; and
performing training by using the plurality of ground truth boxes on which position transformation is performed and the target feature as the training dataset.

7. The method according to any one of claims 1 to 6, wherein the millimeter-wave radar point cloud is generated by superimposing a plurality of frames of point clouds.

8. A data processing apparatus, comprising:
an obtaining unit, configured to obtain a lidar point cloud and a millimeter-wave radar point cloud, and obtain a plurality of ground truth boxes corresponding to the lidar point cloud; and
a position transformation unit, configured to perform position transformation on the plurality of ground truth boxes until a preset condition is met, wherein the preset condition is that a proportion of a quantity of ground truth boxes whose quantity of millimeter-wave radar point clouds reaches a preset threshold in the plurality of ground truth boxes reaches a preset proportion, the millimeter-wave radar point cloud and the plurality of ground truth boxes are located in a same coordinate system, and the plurality of ground truth boxes on which position transformation is performed and the millimeter-wave radar point cloud are a training dataset of a millimeter-wave detection model.

9. The apparatus according to claim 8, wherein the position transformation comprises at least one of a translation operation, a rotation operation, and a scale-up operation, and a scaling factor of the scale-up operation is within a preset range.

10. The apparatus according to claim 8 or 9, wherein the apparatus further comprises a clearing unit, and the clearing unit is specifically configured to:
clear a ground truth box whose quantity of point clouds is less than the preset threshold in the plurality of ground truth boxes.

11. The apparatus according to any one of claims 8 to 10, wherein the millimeter-wave radar point cloud comprises a target-level point cloud and/or an original point cloud, the apparatus further comprises a motion compensation unit, and the motion compensation unit is specifically configured to:
perform motion compensation on the target-level point cloud when the millimeter-wave radar point cloud comprises the target-level point cloud.

12. The apparatus according to any one of claims 8 to 11, wherein the apparatus further comprises a delay compensation unit, and the delay compensation unit is specifically configured to:
perform system delay compensation on the millimeter-wave radar point cloud.

13. The apparatus according to any one of claims 8 to 12, wherein the apparatus further comprises a training unit, and the training unit is specifically configured to:
extract a target feature from the millimeter-wave radar point cloud, wherein the target feature comprises a plurality of the following: coordinates, static/dynamic attributes, a radar cross section, an absolute velocity, a relative velocity, a radar type, and time sequence information of a superimposed frame; and
perform training by using the plurality of ground truth boxes on which position transformation is performed and the target feature as the training dataset.

14. The apparatus according to any one of claims 8 to 13, wherein the millimeter-wave radar point cloud is generated by superimposing a plurality of frames of point clouds.

15. A computer device, comprising a processor, wherein the processor is coupled to a memory; and
the processor is configured to execute instructions stored in the memory, to enable the computer device to perform the method according to any one of claims 1 to 7.

16. A computer-readable storage medium, wherein the computer-readable storage medium stores instructions, and when the instructions are executed by a processor, the method according to any one of claims 1 to 7 is implemented.

17. A computer program product, wherein the computer program product comprises computer program code, and when the computer program code is run on a computer, the method according to any one of claims 1 to 7 is implemented.
